**Europäisches Patentamt**

**European Patent Office**

**Office européen des brevets**

(19)

(11) Veröffentlichungsnummer : **0 293 425 B1**

(12)

# EUROPÄISCHE PATENTSCHRIFT

(45) Veröffentlichungstag der Patentschrift :
**19.02.92 Patentblatt 92/08**

(51) Int. Cl.$^5$ : **G01M 13/02**

(21) Anmeldenummer : **87907938.2**

(22) Anmeldetag : **09.12.87**

(86) Internationale Anmeldenummer :
**PCT/DE87/00586**

(87) Internationale Veröffentlichungsnummer :
**WO 88/04417 16.06.88 Gazette 88/13**

(54) **VERFAHREN ZUM PRÜFEN VON ANTRIEBSACHSEN UND VORRICHTUNG ZUR DURCHFÜHRUNG DES VERFAHRENS.**

(30) Priorität : **13.12.86 DE 3642717**

(43) Veröffentlichungstag der Anmeldung :
**07.12.88 Patentblatt 88/49**

(45) Bekanntmachung des Hinweises auf die
Patenterteilung :
**19.02.92 Patentblatt 92/08**

(84) Benannte Vertragsstaaten :
**AT DE FR GB**

(56) Entgegenhaltungen :
**US-A- 3 712 127**
**US-A- 4 501 139**

(73) Patentinhaber : **GLYCO-ANTRIEBSTECHNIK
GMBH**
**Stielstrasse 18**
**W-6200 Wiesbaden (DE)**

(72) Erfinder : **DAMITZ, Joerg, P.**
**Am Rotweinberg 30**
**W-6251 Runkel 1 (DE)**

EP 0 293 425 B1

Jouve, 18, rue Saint-Denis, 75001 PARIS

## Beschreibung

Die Erfindung betrifft ein Verfahren zum Prüfen von Antriebsachsen für Kraftfahrzeuge, bei welchem die Antriebsachse, bestehend aus Achsgehäuse, Achsgetriebe und mindestens einer Achswelle, in einen Prüfstand eingespannt, antriebsseitig angetrieben und abtriebsseitig gebremst wird, wobei bei der Prüfung der Gesamtfunktion der Achse, bestehend aus Antriebs- und Tragfunktion, die Achse in angetriebenem Zustand durch Antrieb und Bremsen unabhängige Zusatzkräfte belastet wird.

Weiterhin betrifft die Erfindung eine Vorrichtung zum Prüfen von Antriebsachsen für Kraftfahrzeuge, bestehend aus einer Antriebseinheit, welche mit der Antriebsachse in Antriebsverbindung steht, wobei die Achse aus einem Achstriebe, einem Achsgehäuse und mindestens einer Achswelle besteht, wobei an einem mit einem Fundament bzw. einer Montageplatte fest verbundenen Rahmen Kraftübertragungs- und Meßelemente vorgesehen sind.

Der Begriff Antriebsachse umfaßt hier die gesamte aus Achsgehäuse, Achsgetriebe und einer oder mehreren Achswellen bestehenden Einheit, wobei das Achsgetriebe durch eine äußere Abtriebswelle angetrieben wird, die dabei erzeugten Drehmomente umlenkt und auf die Achswelle überträgt, welche ihrerseits abtriebsfähig mit dem sogenannten Antriebsrad verbunden ist, welches in einem Getriebeprüfstand durch eine sogenannte Radaufnahme ersetzt wird. Die als mathematische Linien idealisierten Gebilde, um welche sich die Achswellen drehen und welche gelegentlich auch als "Achsen" bezeichnet werden, werden im folgenden zur besseren Unterscheidung "Drehachsen" genannt.

Verfahren der eingangs genannten Art und auch entsprechende Prüfstände bzw. Vorrichtungen sind hinreichend bekannt. Insbesondere sind auch Verfahren und Vorrichtungen zur Prüfung von Antriebsachsen von Lkw bekannt, für welche die vorliegende Erfindung vorwiegend eingesetzt werden soll. So ist beispielsweise aus der DE-A-35 45 335 ein Verfahren und eine Vorrichtung der obengenannten Art bekannt. Beschrieben wird eine Einrichtung zur Erprobung angetriebener Radachsen für Kraftfahrzeuge, bei welcher die Antriebsachsen, bzw. die Achsgehäuse, fest eingespannt werden. Jede der zu erprobenden Fahrzeugachsen wird auf einem nicht dargestellten ortsfesten Bock oder dergleichen befestigt. Diese Patentanmeldung befaßt sich jedoch nur damit, andere, bekannte Getriebeprüfstände und -verfahren dahingehend zu verbessern, daß sich die Prüfeinrichtung mit einer möglichst geringen Anzahl einfacher Bauelemente verwirklichen läßt. Insbesondere befaßt sich diese Anmeldung nicht mit der Prüfung unter Belastung von Zusatzkräften, die an den Übertragungsstellen zwischen Antriebsachsen und Fahrzeugrahmen angreifen.

Weiterhin ist aus der US-PS 4,501,139 ein Verfahren und eine Vorrichtung bekannt, bei welchem jedoch lediglich die Achswellen mit einer Nabenhülse in einen entsprechenden Prüfstand eingebaut und mit unterschiedlichen Kräften belastet, die jedoch ausschließlich an einem Ende der Welle und zwar entweder über die Nabenhülse oder über eine angeflanschte Radscheibe angreifen. In der Realität wirken jedoch die Kräfte zumindest teilweise auch auf das Achsgehäuse, an welchem der Fahrzeugrahmen bzw. die Karosserie befestigt sind. Dabei ist in diesem Achsgehäuse auch das Achsgetriebe und ein Ende der Achswelle gelagert. Zusätzlich wirken auf das Achsgehäuse auch starke Reaktionskräfte, z.B. beim Bremsen und Beschleunigen. Diese könnten mit der bekannten Vorrichtung und mit dem bekannten Verfahren nach US-PS 4,501,139 nicht erfaßt werden.

Grundsätzlich haben die bekannten Verfahren und Vorrichtungen zur Prüfung von Antriebsachsen den Nachteil, daß die Prüfung unter Bedingungen erfolgt, welche den beim späteren Gebrauch auftretenden Betriebsbedingungen überhaupt nicht oder nur in einem sehr geringen Maße entsprechen. So wird beispielsweise das Achsgehäuse in einem Rahmen fest eingespannt, während die Abtriebsseiten der Achswellen in einer Radaufnahme mit einem drehbaren Teil verbunden sind, welches entweder direkt gebremst wird oder seinerseits einen Generator antreibt, welcher so die von der Achswelle übertragene Bewegungsenergie in elektrischen Strom umsetzt und ebenfalls eine Bremswirkung auf die Welle ausübt, so daß die gesamte Achse im Hinblick auf ihre Hauptfunktion, nämlich das Umlenken und Übertragen von Drehmomenten belastet wird.

Im späteren Betrieb einer z.B. in einen Lkw eingebauten Antriebsachse treten jedoch Betriebsbedingungen und Belastungen der Achse auf, unter welchen diese nach den herkömmlichen Prüfverfahren und mit den herkömmlichen Vorrichtungen nicht getestet werden kann. Stattdessen werden neben den geschilderten reinen Funktionstests weitere Prüfungen der Achse an anderen Prüfständen und nach anderen Verfahren durchgeführt, bei welchen die Achse zwar statisch und dynamisch belastet wird, wobei sie jedoch nicht drehend angetrieben wird. Dies hat zur Folge, daß mehrere Prüfungen der Achse nacheinander erfolgen müssen und die entsprechenden Prüfergebnisse nur eine geringere Aussagekraft haben. Schließlich müssen weitere aufwendige Prüfungen im Fahrbetrieb, d.h. mit der in ein Fahrzeug oder ein anderes Gerät eingebauten Antriebsachse erfolgen, die entsprechend zeit- und kostenintensiv sind.

Demgegenüber liegt der vorliegenden Erfindung die Aufgabe zugrunde, ein Prüfverfahren sowie eine Prüfvorrichtung zu schaffen, mit welchen Antriebsachsen unter tatsächlichen Betriebs- bzw. den Fahrverhältnissen angepaßten Bedingungen geprüft werden können.

Hinsichtlich des Verfahrens wird diese Aufgabe dadurch gelöst, daß auf das Achsgehäuse statische und-/oder dynamische Zusatzkräfte aufgebracht und daß die auf das Achsgehäuse wirkenden Kräfte und Drehmomente erfaßt werden.

Während also bei herkömmlichen Prüfungsverfahren eine Antriebsachse ausschließlich getrennt im Hinblick auf ihre Antriebsfunktion (Umlenkung, Übersetzung und Übertragung von Drehmomenten) und unabhängig davon auf ihre Tragefunktion (Belastung) überprüft wurde, werden diese beiden Prüfverfahren erfindungsgemäß in einem einzigen Prüfverfahren durchgeführt. Der Vorteil des erfindungsgemäßen Verfahrens liegt dabei nicht allein in dem Gewinn an Zeit und Montageaufwand, sondern vor allem darin, daß die Prüfbedingungen für die Antriebsachse realistischer sind, da sich nämlich alle in Frage kommenden Belastungen bzw. auf die Achse wirkenden Zusatzkräfte auch auf die Funktion der Antriebsachse als drehmomentübertragende Einheit auswirken.

Die Erzeugung derartig realistischer Betriebsbedingungen war bisher nur durch den tatsächlichen Fahrbetrieb der Antriebsachse möglich, indem eine entsprechende Antriebsachse an einem Lkw montiert wurde und dieser dann entsprechende Testfahrten unternahm. Allerdings ist ein solches Verfahren außerordentlich aufwendig und auch die Überwachung der Funktionen und die Kontrolle der Belastungskräfte, denen die Antriebsachse ausgesetzt ist, ist mit einem solchen Verfahren nur schwer zu verwirklichen.

Das erfindungsgemäße Verfahren verbindet also einerseits die Vorteile einer Prüfung unter realistischen Bedingungen (wie z.B. bei Testfahrten) mit den Vorteilen der Prüfung auf einem Prüfstand, welcher entsprechend den gewünschten Daten mit Aufzeichnungs- und Meßinstrumenten bestückt ist.

Dabei ist zweckmäßigerweise vorgesehen, daß die Belastung durch die Zusatzkräfte aus einer vorgebbaren statischen Grundlast und einer zusätzlichen, nach Größe und Frequenz wählbaren Zusatzlast besteht.

Im Hinblick auf eine reine Achslast werden hierdurch beispielsweise Verhältnisse simuliert, wie sie bei einem beladenen Lkw auftreten, welcher über unebenes Gelände fährt.

Statische Grundlast und zeitlich variable Zusatzlast sind jedoch nicht nur auf ausschließlich vertikal wirkende Achslasten bezogen, sondern auch auf Vortriebs-, Brems- und Beschleunigungskräfte oder auf Biegemomente, wie sie bei Kurvenfahrten oder bei seitlicher Schräglage auftreten können.

Wenn auch die Vorteile der vorliegenden Erfindung überwiegend anhand von Beispielen aus dem Kraftfahrzeug- insbesondere dem Lkw-Bereich erläutert werden, so versteht es sich dennoch, daß sich die erfindungsgemäßen Merkmale mit entsprechenden Vorteilen auch auf andere Antriebsachsen übertragen lassen, wie z.B. bei Schiffsantrieben oder generell bei Maschinenantrieben.

Erfindungsgemäß ist weiterhin vorgesehen, daß die Zusatzkräfte Vortriebskräfte einschließen. Derartige Kräfte treten beim Bremsen und Beschleunigen von Kraftfahrzeugen auf und können vom Betrag her durchaus mit dem Gewicht eines Fahrzeuges vergleichbar sein, wobei die resultierende Kraft sich durch vektorielle Addition von Gewichtskraft und Vortriebskraft ergibt und von den Lagern zwischen Achswelle und Achsgehäuse aufgenommen werden muß.

Ebenso ist erfindungsgemäß vorgesehen, daß die Zusatzkräfte Biegemomente einschließen.

Wie bereits erwähnt, treten derartige Biegemomente bei Kurvenfahrten oder bei seitlicher Schräglage eines Kraftfahrzeuges auf, da eine in seitlicher Richtung wirkende Massen- bzw. Trägheitskraft, die man als im Schwerpunkt des Fahrzeuges angreifend denken kann, durch eine in den Reifenaufstandspunkten angreifende Reibungskraft kompensiert wird, so daß sich insgesamt ein bezüglich der Aufstandspunkte wirkendes Drehmoment auf das Fahrzeug ergibt, wodurch Achsen bzw. Achswellen mit Biegemomenten belastet werden.

Die vorstehend erwähnten Zusatzkräfte vervollständigen das System der Kräfte, welchen die Achse ausgesetzt werden kann, so daß insgesamt während der Prüfung realistische Betriebsbedingungen simuliert werden können.

In der bevorzugten Ausführungsform der Erfindung ist vorgesehen, daß die Antriebsachse in einen geschlossenen Getriebekreislauf integriert ist und durch Verspannung belastet wird. In diesem Zusammenhang bezieht sich die Verspannung auf den Getriebekreislauf, der so belastet wird, daß je nach dem Grad der Verspannung unterschiedliche Betriebsbedingungen simulierbar sind, wie sie beim Beschleunigen, oder beim Anfahren am Berg unter großer Belastung auftreten können. Der geschlossene Getriebekreislauf hat dabei den Vorteil, daß die insgesamt zum Antrieb eines Prüflings aufzuwendende Energie gerade gleich der im gesamten Getriebekreislauf in Reibungswärme umgestzten Energie sein muß. Zusätzliche Energien mit der abtriebsseitig etwa Reibungswärme in einer Bremse oder Joulsche Wärme und zusätzlicher Strom in einem Generator erzeugt werden, ist nicht erforderlich, da Antriebs- und Abtriebsseite miteinander gekoppelt sind, und jede abtriebsseitige überschüssige Energie damit auf der Antriebsseite zur Verfügung gestellt wird. Das Verfahren arbeitet daher auch mit einem geringeren spezifischen Engergieverbrauch.

Schließlich ist für das erfindungsgemäße Verfahren vorgesehen, daß der geschlossene Getriebekreislauf mindestens zwei Prüflinge in Reihe enthält.

Da ohnehin zusätzliche Getriebeelemente vonnöten sind, um den Getriebekreislauf zu schließen, kann dies sinnvollerweise durch einen zweiten Prüfling, d.h. eine zweite Antriebsachse geschehen. Hieraus ergibt sich nicht nur der Vorteil, daß zwei Antriebsachsen gleichzeitig getestet werden können, sondern man kann auch die durch Fertigungstoleranzen bestimmte Produktionsstreuung ermitteln.

Hinsichtlich der Vorrichtung zum Prüfen von Antriebsachsen für Kraftfahrzeuge, bestehend aus einer Antriebseinheit, welche mit der Antriebsachse in Antriebsverbindung steht, wobei die Achse aus einem Achsgetriebe, einem Achsgehäuse und mindestens einer Achswelle besteht, wobei an einem mit einem Fundament bzw. einer Montageplatte fest verbundenen Rahmen Kraftübertragungs- und Meßelemente vorgesehen sind, wird die der Erfindung zugrundeliegende Aufgabe dadurch gelöst, daß mindestens ein Teil der Kraftübertragungs- und Meßelemente zum Erzeugen und Messen von auf das Achsgehäuse wirkenden Kräfte einerseits am Rahmen bzw. an der Montageplatte und andererseits am Achsgehäuse angreifen.

Es versteht sich in diesem Zusammenhang, daß die Kraftübertragungselemente keine reine Haltefunktion haben, sondern vorgebbare und genau definierte Kräfte übertragen bzw. die Messung der in ihnen wirkenden oder durch sie übertragenen Kräfte ermöglichen. Dabei können diese Kraftübertragungselemente einerseits sowohl am Achsgehäuse als auch an der Achswelle angreifen, während der Bezugspunkt durch den Rahmen, das Fundament bzw. die mit diesen starr verbundenen Teile gebildet wird. Eine solche Vorrichtung ermöglicht grundsätzlich nicht nur die Überprüfung der Funktion der Achse als reines Drehmomentübertragungssystem, sondern auch ihrer Funktion unter zusätzlichen Belastungen.

Dabei hat es sich als zweckmäßig erwiesen, wenn erfindungsgemäß zum Aufbringen von Achslasten eine Traverse über der Achse angeordnet und über Federelemente mit dem Achsgehäuse verbunden ist.

Mit Hilfe einer solchen Traverse können in vertikaler Richtung wirkende Achslasten auf das Achsgehäuse aufgebracht werden, welche dann auch über die Achslager auf die Achswelle wirken. Da in der Realität Achslasten üblicherweise abgefedert sind, sind auch hier zweckmäßigerweise Federelemente als Kraftübertragungselement vorgesehen. Diese können gleichzeitig zur Messung der übertragenen Kräfte dienen.

Die Erfindung sieht in vorteilhafter Weise weiterhin vor, daß das Achsgehäuse gegenüber dem Rahmen um die Achswelle zumindest begrenzt drehbar und über einen Hebel von im wesentlichen der Länge eines halben Raddurchmessers mit einem im wesentlichen tangential zum gedachten Rad ausgerichteten Kraftaufnehmer verbunden ist.

Mit einem solchen Kraftaufnehmer wird unmittelbar die Vortriebskraft gemessen, mit welcher das Fahrzeug angetrieben wird und welche nach dem Newtonschen Prinzip actio = reactio auch in den entsprechenden Achslagern wirkt. Hervorgerufen wird diese Kraft durch die Reaktionsmomente,die auf das zumindest begrenzt drehbar gelagerte Achsgehäuse wirken, wenn der Achswelle ein Drehwiderstand entgegengesetzt wird.

Die bevorzugte Ausführungsform der Erfindung ist unter anderem dadurch gekennzeichnet, daß die Achswelle abtriebsseitig eine Kupplungsglocke drehend antreibt, in welcher ein starr mit der Achswelle verbundener und dieselbe verlängernder Biegearm unter Aufbringen eines Biegemomentes senkrecht zur Drehachse der Achswelle bewegbar ist.

Ein solcher Biegearm kann Biegemomente auf die Achswelle übertragen, wie sie bei Kurvenfahrten oder bei seitlicher Schräglage eines Fahrzeuges auftreten. Dabei ruht die Welle in mindestens einem Achslager nahe ihrem Abtriebsende und ist antriebsseitig mit einem Achsdifferential verbunden. In vorteilhafter Weise enthält hierbei die Kupplungsgloke für das unmittelbar mit der Achswelle in Eingriff stehende Teil ein sphärisches Zahnlager, welches ein Verkippen dieses Teiles gegenüber der Drehachse gestattet. Durch die Anordnung wird erreicht, daß trotz des Aufbringens eines Eiegemomentes auf die Achswelle und einer daraus resultierenden Verbiegung dennoch das Drehmoment nach wie vor einwandfrei von der Welle auf die Kupplungsglocke und damit gegebenenfalls verbundene Getriebeteile übertragen wird.

Als vorteilhaft und zweckmäßig hat es sich erwiesen, daß erfindungsgemäß das Achsgetriebe in Reihe mit weiteren Getriebeelementen und mindestens einem Verspannmotor zu einem geschlossenen Getriebekreis gekoppelt ist.

Wie bereits erwähnt, benötigt man für den Test einer Antriebsachse in einem geschlossenen Getriebekreis eine Antriebsleistung, die ausreicht um die in dem gesamten geschlossenen Getriebekreislauf auftretenden Reibungsenergien zu überwinden. Der Verspannmotor sorgt dabei für eine Verspannung der einzelnen Getriebeelemente, so daß diese mit der entsprechenden Reibung ineinander eingreifen.

Bevorzugt wird eine Ausführungsform der Erfindung, bei welcher ein Verspannmotor vorgesehen ist, welcher bei einer mit einer rechten und einer linken Achswelle versehenen Antriebsachse einerseits über eine das Achsdifferential überbrückende Zwischenwelle mit der Abtriebsseite der einen (linken oder rechten) Achswelle und andererseits mit der Abtriebsseite der anderen (rechten oder linken) Achswelle verbunden ist.

Mit Hilfe eines derart angeordneten Verspannmotors ist es möglich, eine der Achswellen schneller laufen zu lassen als die andere. Dies setzt selbstverständlich ein Differentialgetriebe in der Achse voraus, wobei die Grunddrehzahl durch einen Hilfsantrieb der Zwischenwelle bestimmt wird. Die Differenz der Drehgeschwindigkeit der beiden Achswellen entspricht der Simulation einer Kurvenfahrt. Dabei können zusätzlich Biegemomente über den oben erwähnten Biegearm auf die Achswelle übertragen werden.

Als besonders vorteilhaft wird eine Ausführungsform der Erfindung angesehen, bei welcher zwei gleichartige Antriebsachsen mit je zwei Achswellen abtriebsseitig über zwei Umlenkgetriebe gekoppelt sind und daß eine der Antriebsachsen in direkter und die andere über einen Verspannmotor in indirekter Antriebsverbindung mit der Antriebseinheit steht.

Ein solcher in den Getriebekreislauf integrierter Verspannmotor kann leicht eine Verspannung zwischen den beiden Antriebsachsen erzeugen, so daß die Achsen durch die Verspannung unter einer ähnlichen -(inneren( Belastung angetrieben werden, wie durch das Anbringen einer Bremse oder eines Generators an der Abtriebsseite der Achswellen. Dabei muß jedoch von der Antriebseinheit keine überschüssige Energie erzeugt werden, welche anschließend in der Brems- bzw. Generatoreinheit in Wärmeenergie oder teilweise auch in elektrische Energie umgesetzt wird. Der gesamte Prüfstand wird damit kompakter und insgesamt kostengünstiger.

Schließlich ist in der bevorzugten Ausführungsform der Erfindung vorgesehen, daß zwei gleichartige Antriebsachsen und eine mit einem Verspannmotor versehene Zwischenwelle derart L-förmig angeordnet sind, daß ihre Drehachsen im wesentlichen parallel verlaufen und daß die Drehachsen der beiden Antriebsachsen die Endpunkte der L-Schenkel und die Drehachse der Zwischenwelle den Verbindungspunkt der L-Schenkel bilden. Durch diese Anordnung der Antriebsachsen und der Zwischenwelle sind beide Antriebsachsen in vorteilhafter Weise von oben zugänglich und daher über Traversen belastbar. Damit ist in einfacher Weise und ohne größeren Aufwand das gleichzeitige Testen zweier Antriebsachsen möglich.

Weitere Vorteile, Merkmale und Anwendungsmöglichkeiten der vorliegenden Erfindung werden deutlich anhand der folgenden Beschreibung einer bevorzugten Ausführungsform der Vorrichtung und der dazugehörigen Zeichnungen, anhand welcher auch das Verfahren erläutert wird. Es zeigen:

Figur 1 eine perspektivische Gesamtansicht eines Prüfstandes mit zwei Antriebsachsen,

Figur 2a einen schematischen Querschnitt durch eine Achse im Bereich der Momentenstütze 12,

Figur 2b eine schematische Vorderansicht einer linken Achshälfte,

Figur 2c eine Ansicht auf Figur 2b von oben und

Figur 3 eine Kupplungsglocke zur Aufnahme des Abtriebsendes einer Achse, schematisch dargestellt.

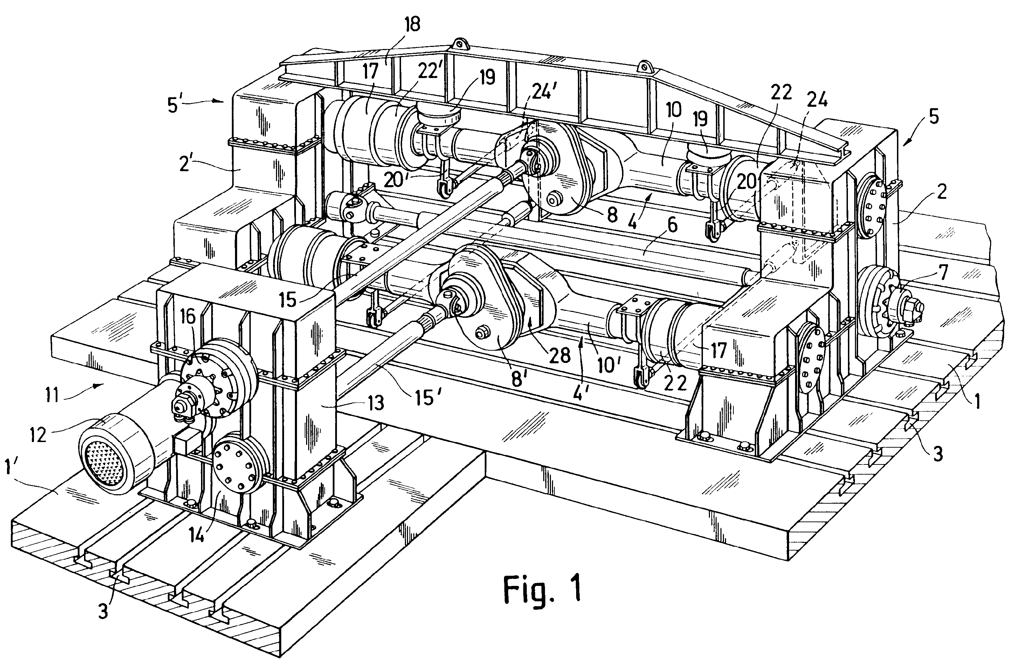

Der gesamte Getriebeprüfstand ist auf einem Fundament bzw. auf Montageplatten 1, 1′ aufgebaut. Wie Figur 1 zeigt, sind auf der Montageplatte 1 L-förmige Rahmenteile 2, 2′ in T-förmigen Nuten 3 der Montageplatte 1 fest verschraubt. Die Rahmenteile 2, 2′ können jedoch zum Ein- oder Ausbau der Achsen 4, 4′ entlang der Nuten 3 verschoben werden.

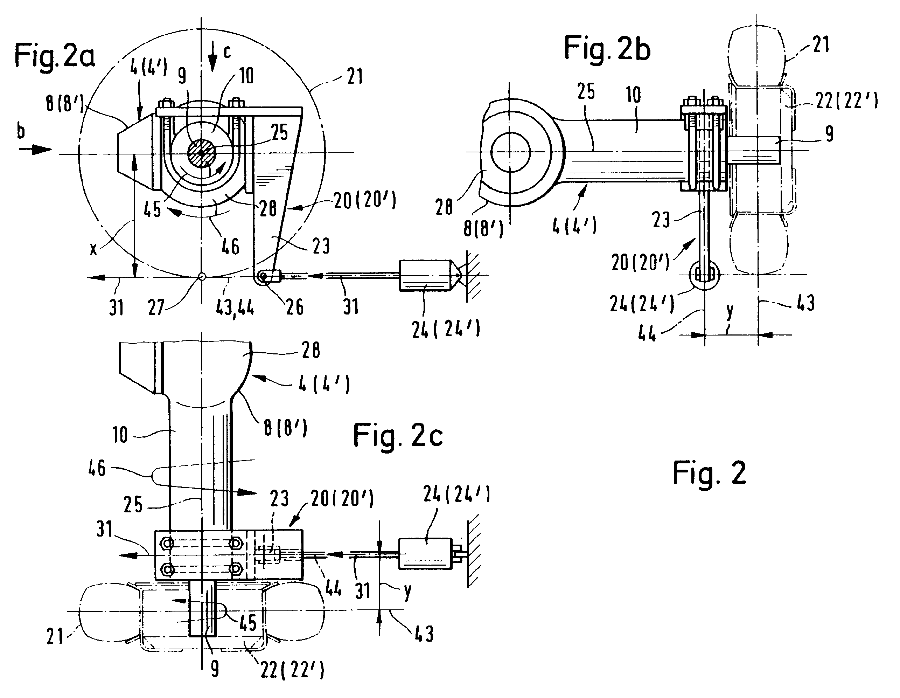

Die Rahmenteile 2, 2′ enthalten je ein Umlenkgetriebe 5, 5′. Die Aufnahmen für die Antriebsachsen 4, 4′ in den Rahmenteilen 2, 2′ bzw, in den Umlenkgetrieben 5, 5′ sind in den Schenkeln der L-förmigen Rahmenteile angeordnet. In dem Eckbereich der Rahmenteile 2, 2′, in welchem die beiden L-Schenkel zusammentreffen, ist eine Zwischenwelle 6 angeordnet, welche mit dem Umlenkgetriebe 5′ direkt gekoppelt ist und mit dem Umlenkgetriebe 5 über den Verspannmotor 7 in Antriebsverbindung steht. Durch Betätigen des Verspannmotors 7 kann so das Umlenkgetriebe 5 gegenüber dem Umlenkgetriebe 5′ je nach Drehrichtung des Verspannmotors 7 entweder vor- oder nachlaufen. Für die Antriebsachsen 4, 4′, welche mit ihren beiden Antriebsseiten mit jeweils einem der beiden Umlenkgetriebe 5, 5′ in fester Drehverbindung stehen, bedeutet dies die Simulation einer Kurvenfahrt, wobei das in den Achsgetrieben 8, 8′ enthaltene Differential die unterschiedlichen Drehbewegungen der linken gegenüber der rechten Achswelle 9 ausgleicht. Die Achswelle 9 ist in der Figur 1 vom Achsgehäuse 10, 10′ umgeben und in Figur 2c sichtbar.

Die Antriebseinheit 11 für die beiden Antriebsachsen 4, 4′ besteht aus dem Antriebsmotor 12, dem in dem Gehäuse 13 angeordneten Rückführgetriebe 14 und dem Verspannmotor 16. Der Verspannmotor 16 bewirkt, daß beim Antrieb zwischen den beiden Abtriebswellen 15, 15′ - nachfolgend nur noch Kardanwelle genannt - eine Verdrehung erzeugt wird, die allerdings beschränkt ist auf die im Gesamtsystem - bestehend aus Kardanwellen 15, 15′, Antriebsachsen 4, 4′, Umlenkgetrieben 5, 5′ und Rückführgetriebe 14 - vorhandene Nachgiebigkeit. Dabei arbeiten entsprechend dem durch den Verspannmotor 16 erzeugten Verspannungsgrad die drehmomentübertragenden Bauteile kraftbelastet gegeneinander. Auf diese Weise ist eine realistische Funktionsprüfung über den gesamten weiten Lastbereich möglich. Es versteht sich von selbst, daß die Umlenkgetriebe 5, 5′ und das Rückführgetriebe 14 so ausgelegt sind, daß ohne Betätigen der Verspannmotoren 7, 16 der Leerlaufbetrieb der Antriebsachsen 4, 4′ möglich ist.

Der Getriebekreislauf ist folgendermaßen aufgebaut: Der Antriebsmotor 12 treibt über das Rückführgetriebe 14 die Kardanwelle 15, die ihrerseits über das im Achsgehäuse 10 befindliche Achsgetriebe 8, die Achswelle 9 der Antriebsachse 4 antreibt. Die Achswellen 9 der Achsen 4, 4′ sind über Kupplungsglocken 17 mit den Umlenkgetrieben 5, 5′ verbunden. Über die Umlenkgetriebe 5, 5′ werden die Drehmomente der Achswellen 9 der Antriebsachse 4 auf die Achswellen 9 der Antriebsachse 4′ übertragen und wirken über das Achsgetriebe 8′ der Antriebsachse 4′ über die Kardanwelle 15′ auf das Rückführgetriebe 14 zurück. Durch die Umlenkung in den Umlenkgetriebeb 5, 5′ sowie in dem Rückführgetriebe 14 haben beide Kardanwellen 15, 15′ und beide Antriebsachsen 4, 4′ bzw. deren Achswellen 9 jeweils den gleichen Drehsinn.

Bei dem oben geschilderten Getriebekreislauf können durch entsprechende Betätigungen des Verspannmotors 16 die Antriebsachsen 4, 4′ treibend (= positive Momentenbelastung) und bremsend (= negative Momentenbelastung) betrieben werden. Diese Simulation entspricht bei treibender (= positiver) Momentenbelastung Anfahrvorgängen, normaler Betriebsfahrt als auch Bergfahrten mit entsprechender Lastzuordnung.

Bei bremsender (= negativer) Momentenbelastung entsprechen die Betrieszustände Bremsen, auch mittels Motorbremse, Schiebebetrieb (z.B. bei Talfahrt) und Rückwärtsfahrt.

Der besondere Vorteil des vorliegenden Prüfstandes und des damit verwirklichten Prüfverfahrens liegt somit darin, daß nicht nur eine reine Funktionsprüfung der Getriebe im Hinblick auf die Übertragung von Drehmomenten von der Abtriebswelle auf ein Antriebsrad untersucht werden kann, sondern daß zusätliche Belastungen der Antriebsachen 4, 4′ aufgebracht werden können, welche den tatsächliche Belastungen beim späteren Betrieb der Antriebsachse in einem Lkw entsprechen. Über der Achse 4 erkennt man eine Traverse 18, welche mit Luftfedern 19 auf dem Achsgehäuse 10 aufliegt. Die Traverse 18 wird von oben hydraulisch belastet, wobei auch kurzzeitige Lastwechsel möglich sind. Zur Erläuterung der Figur 1 sei noch gesagt, daß die Traverse 18 nicht auf den Rahmenteilen 2, 2′ aufliegt, sondern ausschließlich über die Luftfeder 19 vom Achsgehäuse 10 bzw. der Antriebsachse 4 getragen wird.

Weiterhin erkennt man unter den Luftfedern 19 Momentenstützen 20, 20′, deren Zweckbestimmung später erläutert wird. Diese sind im einzelnen besser in Figur 2a zu erkennen, die einen Querschnitt durch die Antriebsachse 4 entlang der Momentenstütze 20 darstellt. Man erkennt in Figur 2a die Achswelle 9, welche in in diesem Querschnitt nicht sichtbaren Achslagern innerhalb des Achsgehäuses 10 läuft. Das Achsgehäuse 10 liegt wiederum über Achslager, welche sich unter anderem im Bereich der Radaufnahme 22, 22′ befinden (Figur 1), auf den Achswellen 9 auf, und ist ansonsten frei drehbar. Wird nun ein Drehmoment über die Kardanwelle 15, das Achsgetriebe 8 und die Achswelle 9 gegen einen entsprechenden Widerstand am Abtriebsende der Achswelle 9 übertragen - was dem Anfahren, Beschleunigen oder auch dem Beibehalten einer Geschwindigkeit unter Überwindung von Luft- und Rollreibungskräften entspricht - so ruft dieses abtriebsseitig übertragende Drehmoment ein Gegendrehmoment hervor, welches zunächst über die Achslager und das Achsgetriebe 8 auf das Achsgehäuse 10 wirkt und dieses in Gegenrichtung zu drehen versucht. Da das Achsgehäuse 10 im allgemeinen über (nicht dargestellte) Blattfedern oder andere Kraft- und Momentenübertragungselemente mit dem Fahrgestell verbunden ist, wird dieses Drehmoment von dem gesamten Fahrzeug aufgenommen. Dieses Drehmoment äußert sich jedoch auch sichtbar bei starker Beschleunigung durch das Eintauchen des Fahrzeughecks bzw. das Anheben der Frontpartie.

Bei herkömmlichen Prüfständen wird das Achsgehäuse fest im Prüfstand montiert und das Drehmoment durch den Rahmen des Prüfstandes oder dergleichen aufgefangen. Bei dem vorliegenden Prüfstand sind zum Auffangen des Drehmomentes die bereits erwähnten Momentenstützen 20, 20′ vorgesehen. Jede der Momentenstützen 20, 20′ ist über je einen Hebel 23 (die schematische Darstellung der Figur 2a zeigt nur den Hebel 23 für die Momentenstütze 20), mit dem zugeordneten Kraftaufnehmer 24, 24′ verbunden, die mit den Rahmenteilen 2, 2′ in Verbindung stehen.

Die wirksame Länge des Hebels 23 (die mit "x" gekennzeichnet ist), d.h. der Abstand zwischen der Drehachse 25 und dem Angriffspunkt 26 des Kraftaufnehmers 24 entspricht genau dem Abstand des Radaufstandspunktes 27 eines für die Antriebsachse vorgesehenen Antriebsrades 21. Die gestrichelte Darstellung des Antriebsrades 21 ist nur der besseren Verständlichkeit wegen erfolgt. Das tatsächliche Vorhandensein eines Antriebsrades ist sonst an der Prüfvorrichtung nicht erforderlich und auch nicht vorgesehen.

Da das Reaktionsmoment, d.h, das auf das Achsgehäuse 10 wirkende Drehmoment (Pfeil 46) nach dem Newtonschen Prinzip actio = reactio gleich dem Antriebsmoment (Pfeil 45) ist, entspricht die in dem Kraftaufnehmer 24 gemessene Kraft (Pfeil 31) auch der Vortriebskraft, welche auf das Fahrzeug bzw, auf die (nicht dargestellten) Achslager wirkt. Zusammen mit der Belastung des Achsgehäuses 10 bzw. der Achslager über die Traverse 18 und die Luftfedern 19, 19′ werden die Achslager der Achse 4, 4′ (bei Einbau einer weiteren Traverse) zusätzlich mit beim Antrieb auftretenden Vortriebskräften belastet, die mit Hilfe der Kraftaufnehmer 24, 24′ meßbar sind.

In den schematischen Darstellungen der Figuren 2b und 2c erkennt man die Anordnung der Momentenstütze 20 in Bezug auf die Achsen 4, 4′ bzw. deren Differentialgetriebe 28 und der Radangriffsebene 43 des Rades 21, Die Reaktionskraft aus dem Drehmoment tritt - wie der Pfeil 31 zeigt - in der Momentenstützenebene 44 auf, Durch den Abstand "y" zwischen der Radangriffsebene 43 und der Momentenstützenebene 44 wirkt somit ein Belastungsmoment auf die Achswelle 9 bzw. Achsen 4, 4′ wie es auch im Fahrbetrieb vorhanden ist.

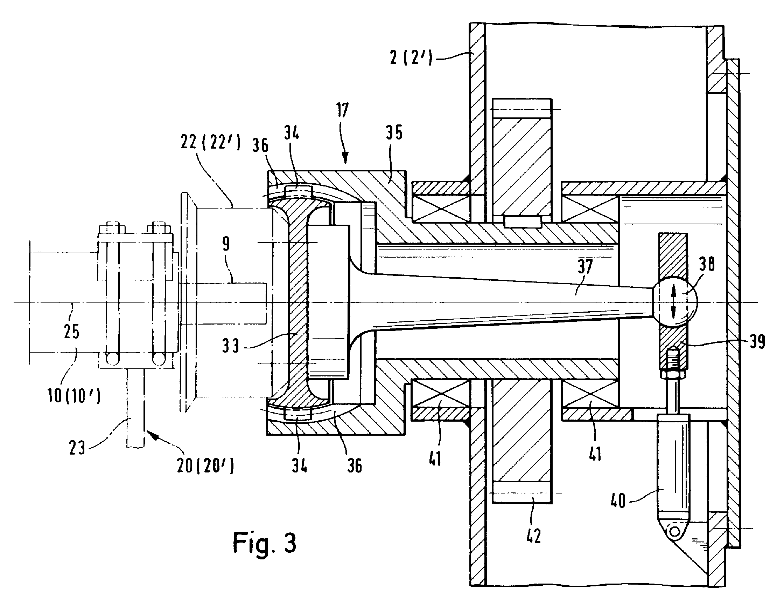

Figur 3 zeigt die bereits erwähnte Kupplungsglocke 17, über welche die Achswelle 9 mit dem Umlenkgetriebe 5 bzw. 5′ in Verbindung steht (Figur 1). Die Achswelle 9 ist über eine Radaufnahme 22 (22′) fest mit einer Radscheibe 33 verbunden, welche insoweit der Radscheibe an einem Fahrzeug entspricht. Im Unterschied hierzu weist im vorliegenden Fall die Radscheibe 33 jedoch eine sphärisch ausgebildete Verzahnung 34 auf, die mit einer entsprechend ausgebildeten Verzahnung im Lagergehäuse 35 ein sphärisches Zahnlager 36 bildet. Die sphärische Ausbildung des Zahnlagers 36 ermöglicht Kippbewegungen der Radscheibe 33 gegenüber der Drehachse 25. Bei Kurvenfahrten oder seitlichen Schräglagen am Hang treten durch die Masse des Fahrzeuges Kräfte auf, die über vom Radaufstandspunkt 27 (Figur 2a) und der Drehachse 25 gebildeten Hebel auf die Radscheibe 33 wirken, und damit ein Moment in die Radscheibe 33 einleiten. Die Achswelle 9 wird hierdurch entsprechend belastet. Derartige, auf eine Radscheibe einwirkende Biegemomente können durch die Kupplungsglocke 17 mit Hilfe des Biegearms 37 ebenfalls realistisch simuliert werden. Zu diesem Zweck ist, wie Figur 3 zeigt, das äußere Ende des Biegearms 37 mit einem Kugelkopf 38 versehen, der bei 39 entsprechend gelagert und ebenfalls als sphärisches Lager ausgebildet ist. Das gewünschte bzw. erforderliche Biegemoment auf die Achswelle 9 wird durch den, an dieser

Lagerung angelenkten Hydraulikzylinder 40 aufgebracht.

Die Welle 9 treibt dabei über die Radscheibe 33 und deren Verzahnung 34 das in den Lagern 41 gelagerte Lagergehäuse 35 an, welches über das Zahnrad 42 mit den übrigen Teilen des Umlenkgetriebes 5 bzw. 5′ in formschlüssiger Drehverbindung steht.

Der Verspannmotor 7 ist mit einem seiner Antriebselemente mit dem Umlenkgetriebe 5 verbunden, während das andere Antriebselement des Verspannmotors 7 über die Zwischenwelle 6 mit dem gegenüberliegenden Umkenkgetriebe 5′ verbunden ist. Wird der Verspannmotor 7 betätigt, so erzeugt er eine relative Drehung zwischen seinen Antriebselementen, so daß die beiden Umlenkgetriebe 5, 5′ nicht mehr synchron laufen, sondern das eine schneller dreht als das andere. Damit drehen auch die Antriebswellen 9 auf der einen Seite der Antriebsachsen 4, 4′ schneller als auf der anderen Seite. Diese unterschiedlich schnellen Drehbewegungen werden durch das Differential im Achsgetriebe 8, 8′ ermöglicht. Ein solcher Vorgang entspricht einer Kurvenfahrt, wobei die Betriebsdrehzahl der Zwischenwelle 6 durch einen (nicht dargestellten) Hilfsantrieb aufgeprägt wird.

Der Verspannmotor 7 ist ein hydraulischer Verspannmotor mit unendlichem Drehwinkel, d.h. es können beliebig lange Kurvenfahrten oder auch das Durchdrehen eines Rades simuliert werden. Der Verspannnmotor 16 benötigt dagegen nur einen kleinen Verdrehwinkel, kann jedoch auch ein hydraulischer Verspannmotor mit unendlichem Drehwinkel wie der Verspannmotor 7 sein.

Insgesamt können also mit dem vorstehend beschriebenen Prüfstand entsprechend dem geschilderten Verfahren gleichzeitig zwei Antriebsachsen überprüft werden, wobei sämtliche statischen und dynamischen Belastungen, denen die Achse während des Betriebes ausgesetzt sind, realistisch simuliert werden können und diese Belastungen gleichzeitig exakt meßbar sind, um Fertigungsstreuungen bei der Meßdatenauswertung beurteilen zu können. Der Begriff Fertigungssteuerung beinhaltet im weitesten Sinne alle Fehlerquellen, die sich z.B. aus Toleranzen, Materialfehlern usw. bei den verwendeten Bauteilen ergeben können.

## Patentansprüche

1. Verfahren zum Prüfen von Antriebsachsen (4, 4′) für Kraftfahrzeuge, bei welchem die Antriebsachse (4, 4′), bestehend aus Achsgehäuse (10, 10′), Achsgetriebe (8, 8′) und mindestens einer Achswelle (9), in einen Prüfstand eingespannt, antriebsseitig angetrieben und abtriebsseitig gebremst wird, wobei bei der Prüfung der Gesamtfunktion der Achse (4, 4′), bestehend aus Antriebs- und Tragfunktion, die Achse (4, 4′) in angetriebenem Zustand durch von Antrieb und Bremsen unabhängige Zusatzkräfte belastet wird, dadurch gekennzeichnet, daß auf das Achsgehäuse statische und/oder dynamische Zusatzkräfte aufgebracht und daß die auf das Achsgehäuse wirkenden Kräfte und Drehmomente erfaßt werden.

2. Verfahren nach Anspruch 1, dadurch gekennzeichnet, daß die Belastung durch die Zusatzkräfte aus einer vorgebbaren statischen Grundlast und einer zusätzlichen, nach Größe und Frequenz wählbaren Zusatzlast besteht.

3. Verfahren nach Anspruch 1 oder 2, dadurch gekennzeichnet, daß die Zusatzkräfte Vortriebskräfte einschließen.

4. Verfahren nach einem der Ansprüche 1 bis 3, dadurch gekennzeichnet, daß die Zusatzkräfte Biegemomente einschließen.

5. Verfahren nach einem der Ansprüche 1 bis 4, dadurch gekennzeichnet, daß die Antriebsachse (4, 4′) in einen geschlossenen Getriebekreislauf integriert ist und durch Verspannung belastet wird.

6. Verfahren nach Anspruch 5, dadurch gekennzeichnet, daß der Getriebekreis mindestens zwei Prüflinge (Antriebsachsen 4, 4′) in Reihe enthält.

7. Vorrichtung zum Prüfen von Antriebsachsen (4, 4′) für Kraftfahrzeuge, bestehend aus einer Antriebseinheit (11), welche mit der Antriebsachse (4, 4′) in Antriebsverbindung steht, wobei die Achse (4, 4′) aus einem Achsgetriebe (8, 8′), einem Achsgehäuse (10, 10′) und mindestens einer Achswelle (9) besteht, wobei an einem mit einem Fundament bzw. einer Montageplatte (1, 1′) fest verbundenen Rahmen (2) Kraftübertragungs- und Meßelemente (24, 24′; 11, 11′; 20, 20′; 19) vorgesehen sind, dadurch gekennzeichnet, daß mindestens ein Teil der Kraftübertragungs- und Meßelemente (24, 24′, 19) zum Erzeugen und Messen von auf das Achsgehäuse (10, 10′) wirkenden Kräfte einerseits am Rahmen (2) bzw. an der Montageplatte (1, 1′) und andererseits am Achsgehäuse (10, 10′) angreifen.

8. Vorrichtung nach Anspruch 7, dadurch gekennzeichnet, daß zum Aufbringen von Achslasten eine Traverse (18) über der Achse (4, 4′) angeordnet und über Federelemente (19) mit dem Achsgehäuse (10, 10′) verbunden ist.

9. Vorrichtung nach einem der Ansprüche 7 oder 8, dadurch gekennzeichnet, daß das Achsgehäuse (10, 10′) gegenüber dem Rahmen (2) um die Achswelle (9) zumindest begrenzt drehbar und über einen Hebel (23, 23′) von im wesentlichen der Länge eines halben Raddurchmessers mit einem im wesentlichen tangential zum gedachten Rad ausgerichteten Kraftaufnehmer (24, 24′) verbunden ist.

10. Vorrichtung nach einem der Ansprüche 7 bis 9, dadurch gekennzeichnet, daß die Achswelle (9) abtriebsseitig eine Kupplungsglocke (17) drehend antreibt, in welcher ein starr mit der Achswelle (9) verbundener und dieselbe verlängernder Biegearm (37) unter Aufbringen eines Biegemomentes senkrecht zur Drehachse (25) der Achswelle (9) bewegbar ist.

11. Vorrichtung nach Anspruch 10, dadurch gekennzeichnet, daß die Kupplungsglocke (17) für das unmittelbar mit der Achswelle (9) in Eingriff stehende Teile d.h. Radscheibe 33 ein sphärisches Zahnlager (34) enthält, welches ein Verkippen des Teiles (33) gegenüber der Drehachse (25) gestattet.

12. Vorrichtung nach einem der Ansprüche 7 bis 11, dadurch gekennzeichnet, daß das Achsgetriebe (8, 8′) in Reihe mit weiteren Getriebeelementen (5, 5′; 14) und mindestens einem Verspannmotor (16) zu einem geschlossenen Getriebekreis verkoppelt ist.

13. Vorrichtung nach einem der Ansprüche 7 bis 12, dadurch gekennzeichnet, daß ein Verspannmotor (7) vorgesehen ist, welcher bei einer mit einer rechten und einer linken Achswelle (9) versehenen Antriebsachse (4, 4′) einerseits über eine das Achsdifferential überbrückende Zwischenwelle (6) mit der Abtriebsseite der linken oder rechten Achswelle (9) und andererseits mit der Abtriebsseite der anderen d.h. rechten oder linken Achswelle (9) verbunden ist.

14. Vorrichtung nach Anspruch 12 oder 13, dadurch gekennzeichnet, daß zwei gleichartige Antriebsachsen (4, 4′) mit je zwei Achswellen (9) abtriebsseitig über zwei Umlenkgetriebe (5, 5′) gekoppelt sind und daß eine der Antriebsachsen (4, 4′) in direkter und die andere über einen Verspannmotor (16) in indirekter Antriebsverbindung mit der Antriebseinheit (11) steht.

15. Vorrichtung nach Anspruch 13 oder 14, dadurch gekennzeichnet, daß zwei gleichartige Antriebsachsen (4, 4′) und eine mit einem Verspannmotor (7) versehene Zwischenwelle (6) derart L-förmig angeordnet sind, daß ihre Drehachsen (25) im wesentlichen parallel verlaufen und daß die Drehachsen (25) der beiden Antriebsachsen (4, 4′) die Endpunkte der L-Schenkel und die Drehachse (25″) der Zwischenwelle (6) den Verbindungspunkt der L-Schenkel bilden.

16. Vorrichtung nach einem der Ansprüche 7 bis 15, dadurch gekennzeichnet, daß zur Erfassung von auf das Achsgehäuse (10, 10′) wirkenden Drehmomenten Kraftaufnehmer (24, 24′) vorgesehen sind, welche einerseits am Rahmen (2) oder der Montageplatte (1) und andererseits an einem mit dem Achsgehäuse (10, 10′) fest verbundenen Teil exzentrisch zum Achsgehäuse (10, 10′) angreifen.

## Claims

1. Process for testing driving axles (4,4′) for motor vehicles in which the driving axle (4,4′), which comprises an axle casing (10,10′), axle transmission (8,8′) and at least one axle shaft (9), is clamped in a test-bed, driven at the input side and braked at the output side while, when the total function of the axle (4,4′) including the driving and carrying functions is tested, the axle (4,4′) is in the driven state loaded by additional forces which are independent of the driving and braking, characterised in that static and/or dynamic additional forces act on the axle casing and that the forces and torques acting on the axle casing are detected.

2. Process according to Claim 1, characterised in that loading by the additional forces comprises presettable static basic loading and auxiliary additional loading which is selectable according to dimension and frequency.

3. Process according to Claim 1 or 2, characterised in that the additional forces include driving forces.

4. Process according to one of Claims 1 to 3, characterised in that the additional forces include bending moments.

8

5. Process according to one of Claims 1 to 4, characterised in that the driving axle (4,4′) is integrated in a closed transmission circuit and is loaded by torsion.

6. Process according to Claim 5, characterised in that the transmission circuit contains at least two testpieces (driving axles 4,4′) in series.

7. Device for testing driving axles (4,4′) for motor vehicles, comprising a driving unit (11) which is in driving connection with the driving axle (4,4′) wherein the axle (4,4′) comprises axle transmission (8,8′), axle casing (10,10′) and at least one axle shaft (9) and wherein force-transmitting and measuring elements (24,24′; 11,11′; 20,20′; 19) are provided on a frame (2) firmly connected to a base or assembly plate (1,1′), characterised in that at least part of the force-transmitting and measuring elements (24,24′;19) engages on the one hand the frame (2) or the assembly plate (1,1′) and on the other hand the axle casing (10, 10′) for producing the measuring forces acting onto the axle casing (10, 10′)

8. Device according to Claim 7, characterised in that a beam (18) is situated above the axle (4,4′) for the transmission of axle loading, the beam being connected to the axle casing (10, 10′) via spring elements (19).

9. Device according to Claim 7 or 8, characterised in that the axle casing (10, 10′) is at least within limits rotatable about the axle shaft (9) with respect to the frame (2) and is connected to a force-receiving member (24,24′) by means of a lever (23,23′) the length of which corresponds substantially to one half of wheel diameter, the force-receiving member extending substantially tangentially to the imaginary wheel.

10. Device according to one of Claim 7 to 9, characterised in that the axle shaft (9) drives rotatably at the output side a coupling bell (17) in which a bending arm (37) connected rigidly to and extending the axle shaft (9) is movable perpendicularly to the axis (25) of rotation of the axle shaft (9), when a bending moment is applied.

11. Device according to Claim 10, characterised in that the coupling bell (17) comprises a spherical toothed bearing (34) for the part, engaging directly with the axle shaft (9), i.e. wheel disk (33), the bearing allowing tilting of the part (33) with respect to the axis (25) of rotation.

12. Device according to one of Claims 7 to 11, characterised in that the axle transmission (8,8′) is coupled in series with further transmission elements (5,5′;14) and at least one torsion motor (16) to a closed transmission circuit.

13. Device according to one of Claims 7 to 12, characterised in that a torsion motor (7) is provided which, in the case of a driving axle (4,4′) provided with a right-hand and a left hand axle shaft (9), is connected on the one hand, via an intermediate shaft (6) which spans the axle differential, with the output side of the left-hand or right-hand axle shaft (9) and on the other hand with the output side of the other, i.e. right-hand or left-hand driving axle (9).

14. Device according to Claim 12 or 13, characterised in that two driving axles (4,4′) of the same kind, each of which comprises two axle shafts (9) are coupled at the output side via two reversible transmissions (5,5′) and that one of the driving axles (4,4′) is in direct driving connection and the other, via a torsion motor (16), in an indirect driving connection with the driving unit (11).

15. Device according to Claim 13 or 14, characterised in that two driving axles (4,4′) of the same kind and an intermediate shaft (6) provided with a torsion motor (7) are in such L-shape arrangement that their axes (25) of rotation extend substantially parallel to each other and that the axes (25) of rotation of both the driving axles (4,4′) form the end points of the arms of the L-shape and the axis (25″) of rotation of the intermediate shaft (6) forms the connecting point of the arms of the L-shape.

16. Device according to one of Claims 7 to 15, characterised in that force-receiving elements (24,24′) are provided for the detection of the torques acting on the axle casing (10,10′) , the elements engaging eccentrically to the axle casing (10,10′) on the one hand with the frame (2) or the assembly plate (1) and on the other hand with a part firmly connected to the axle casing (10,10′).

**Revendications**

1. Procédé pour l'essai d'essieux moteurs (4, 4′) de véhicules automobiles, dans lequel l'essieu moteur (4, 4′), se composant d'un carter d'essieu (10, 10′), d'une transmission d'essieu (8, 8′) et d'au moins un arbre d'essieu (9), est abloqué dans un banc d'essai, mené côté entraînement et freiné côté sortie, procédé dans lequel, lors du contrôle de la fonction globale de l'essieu (4, 4′), incluant une fonction d'entraînement et une fonction de support, l'essieu (4, 4′) est contraint, à l'état entraîné, par des forces additionnelles indépendantes de l'entraînement et du freinage, caractérisé par le fait que des forces additionnelles statiques et/ou dynamiques sont appliquées au carter d'essieu ; et par le fait que les forces et les couples de rotation agissant sur le carter d'essieu sont détectés.

2. Procédé selon la revendication 1, caractérisé par le fait que la contrainte imposée par les forces additionnelles se compose d'une charge fondamentale statique, pouvant être préétablie, ainsi que d'une charge additionnelle supplémentaire pouvant être sélectionnée selon l'amplitude et la fréquence.

3. Procédé selon la revendication 1 ou 2, caractérisé par le fait que les forces additionnelles englobent des forces de propulsion.

4. Procédé selon l'une des revendications 1 à 3, caractérisé par le fait que les forces additionnelles englobent des couples de flexion.

5. Procédé selon l'une des revendications 1 à 4, caractérisé par le fait que l'essieu moteur (4, 4') est intégré dans un circuit fermé de transmission, et est contraint par voilement.

6. Procédé selon la revendication 5, caractérisé par le fait que le circuit de transmission renferme un alignement comprenant au moins deux spécimens contrôlés (essieux moteurs 4, 4').

7. Dispositif pour l'essai d'essieux moteurs (4, 4') de véhicules automobiles, constitué d'une unité d'entraînement (11) en liaison d'entraînement avec l'essieu moteur (4, 4'), l'essieu (4, 4') se composant d'une transmission d'essieu (8, 8'), d'un carter d'essieu (10, 10') et d'au moins un arbre d'essieu (9), dispositif dans lequel des éléments (24, 24' ; 11, 11' ; 20, 20' ; 19) mesureurs et transmetteurs de forces sont prévus sur un bâti (2) respectivement assujetti à un socle ou à une semelle de montage (1, 1'), caractérisé par le fait qu'au moins une partie des éléments (24, 24', 19) mesureurs et transmetteurs de forces vient en prise, d'une part, respectivement avec le bâti (2) ou avec la semelle de montage (1, 1') et, d'autre part, avec le carter d'essieu (10, 10'), en vue d'engendrer et de mesurer des forces agissant sur ledit carter d'essieu (10, 10').

8. Dispositif selon la revendication 7, caractérisé par le fait que, pour imposer des charges d'essieu, une traverse (18) est disposée au-dessus de l'essieu (4, 4') et est reliée au carter d'essieu (10, 10') par l'intermédiaire d'éléments élastiques (19).

9. Dispositif selon l'une des revendications 7 ou 8, caractérisé par le fait que le carter d'essieu (10, 10') peut accomplir au moins une rotation limitée autour de l'arbre d'essieu (9), par rapport au bâti (2), et est relié, par l'intermédiaire d'un levier (23, 23') représentant sensiblement la longueur d'un rayon de roue, à un capteur de forces (24, 24') orienté, pour l'essentiel, tangentiellement par rapport à la roue imaginaire.

10. Dispositif selon l'une des revendications 7 à 9, caractérisé par le fait que l'arbre d'essieu (9) mène en rotation, côté sortie, une cloche d'accouplement (17) dans laquelle un bras de flexion (37), relié rigidement à l'arbre d'essieu (9) et prolongeant ce dernier, peut être mis en mouvement perpendiculairement à l'axe de rotation (25) de l'arbre d'essieu (9), par imposition d'un couple de flexion.

11. Dispositif selon la revendication 10, caractérisé par le fait que la cloche d'accouplement (17) renferme, pour la partie directement en prise avec l'arbre d'essieu (9), c'est-à-dire pour le disque de roue (33), un palier denté sphérique (36) qui autorise un basculement de ladite partie (33) par rapport à l'axe de rotation (25).

12. Dispositif selon l'une des revendications 7 à 11, caractérisé par le fait que la transmission d'essieu (8, 8') est accouplée en série avec d'autres éléments de transmission (5, 5' ; 14), et avec au moins un moteur de blocage (16), pour former un circuit fermé de transmission.

13. Dispositif selon l'une des revendications 7 à 12, caractérisé par le fait qu'il est prévu un moteur de blocage (7) qui, en présence d'un essieu moteur (4, 4') équipé d'un arbre d'essieu (9) situé à droite et d'un autre situé à gauche, est relié d'une part, par l'intermédiaire d'un arbre intercalaire (6) coiffant le différentiel d'essieu, au côté sortie de l'arbre d'essieu (9) situé à gauche ou à droite et, d'autre part, au côté sortie de l'autre arbre d'essieu (9), c'est-à-dire celui situé à droite ou à gauche.

14. Dispositif selon la revendication 12 ou 13, caractérisé par le fait que deux essieux moteurs (4, 4') d'un même type, munis chacun de deux arbres d'essieux (9), sont accouplés côté sortie par l'intermédiaire de deux transmissions de renvoi (5, 5') ; et par le fait que l'un des essieux moteurs (4, 4') est en liaison d'entraînement directe avec l'unité d'entraînement (11), l'autre étant en liaison d'entraînement indirecte par l'intermédiaire d'un moteur de blocage (16).

15. Dispositif selon la revendication 13 ou 14, caractérisé par le fait que deux essieux moteurs (4, 4') d'un même type et un arbre intercalaire (6), doté d'un moteur de blocage (7), sont agencés en une configuration en L de telle sorte que leurs axes de rotation (25) s'étendent pour l'essentiel parallèlement ; et par le fait que les axes de rotation (25) des deux essieux moteurs (4, 4') forment les points extrêmes des branches du L, l'axe de rotation (25″) de l'arbre intercalaire (6) formant le point de liaison des branches du L.

16. Dispositif selon l'une des revendications 7 à 15, caractérisé par le fait que des carpteurs de forces (24, 24'), prévus pour détecter des couples de rotation agissant sur le carter d'essieu (10, 10'), sont en prise, excentriquement par rapport à ce carter d'essieu (10, 10'), d'une part avec le bâti (2) ou avec la semelle de montage (1) et, d'autre part, avec une partie assujettie audit carter d'essieu (10, 10').

Fig. 1

Fig. 2

Fig.2a

Fig.2b

Fig.2c

Fig. 3